# EUROPÄISCHE PATENTSCHRIFT

(11) **EP 0 599 874 B1**
(45) Veröffentlichungstag und Bekanntmachung des Hinweises auf die Patenterteilung: **12.06.1996**
(21) Anmeldenummer: 92916131.3
(22) Anmeldetag: 03.08.1992
(51) Int. Cl.: H04J 3/16, H04Q 11/04

(54) **ZELLENMULTIPLEXVERFAHREN FÜR MEHRERE EMPFÄNGER, DIE MIT EINER ÜBERTRAGUNGSLEITUNG VERBUNDEN SIND**
CELL-MULTIPLEXING PROCESS FOR SEVERAL RECEIVERS CONNECTED BY A TRANSMISSION LINE
PROCEDE DE MULTIPLEXAGE DE CELLULES POUR UNE PLURALITE DE RECEPTEURS RELIES PAR UNE LIGNE DE TRANSMISSION

(30) Priorität: 22.08.1991 DE 4127780
(43) Veröffentlichungstag der Anmeldung: 08.06.1994
(73) Patentinhaber: SIEMENS AKTIENGESELLSCHAFT, D-80333 München (DE)
(72) Erfinder: WIENKOP, Uwe, D-8000 München 83 (DE)
(86) Internationale Anmeldenummer: DE9200641
(87) Internationale Veröffentlichungsnummer: WO9304542

(56) Entgegenhaltungen:
- EP-A- 0 322 029
- FR-A- 2 265 227
- FR-A- 2 497 041
- US-A- 4 742 513
- PATENT ABSTRACTS OF JAPAN vol. 011, no. 134 (P-571)28. April 1987

## Beschreibung

In Informationen vermittelnden Systemen, z.B. paketvermittelnden Systemen, besteht an verschiedenen Stellen, z.B. Vermittlungsrechnern, Servern usw., die Aufgabe, die für mehrere Empfänger bestimmten Zellströme auf eine einzelne Übertragungsleitung zeitlich zu verschränken oder zu multiplexen. Die Zellen werden auf der Übertragungsleitung transportiert und später an Verteilknoten wieder in für einzelne Empfänger bestimmte Zellströme aufgespaltet. Für das Multiplexen gibt es dabei folgende Randbedingungen:
- die Empfänger besitzen häufig unterschiedliche Empfangsdatenraten. Da die Datenrate auf der Übertragungsleitung aber konstant ist, müssen bereits beim Multiplexen der Zellströme die unterschiedlichen Empfangsdatenraten in Form unterschiedlich langer zeitlicher Abstände zwischen zwei für den gleichen Empfänger bestimmten Zellen berücksichtigt werden.
- Das Multiplexen ist unter Echtzeitbedingungen auszuführen.
- Das Multiplexen sollte auch noch bei Überreservierungen einsetzbar sein. Zwar werden derzeit nur selten Überreservierungen eingesetzt, jedoch ist abzusehen, daß in naher Zukunft Überreservierungen unumgänglich sein werden. In einer solchen Situation wird dann ein Multiplexverfahren notwendig werden, welches sich dynamisch an die jeweils aktive Sender-/Empfänger-Konfiguration anpaßt.

Aus FR, A, 2 467 041 ergibt sich ein Verfahren, bei dem Datenpakete von mehreren Sendern auf eine schnelle Übertragungsleitung gemultiplext werden. Dazu ist ein Konzentrator vorgesehen, der pro Sender einen Eingangsspeicher aufweist, in dem die vom zugeordneten Sender gelieferten Daten zwischengespeichert werden. Diese Eingangsspeicher werden zyklisch abgefragt und immer dann, wenn im Eingangsspeicher ein Datenpaket enthalten ist, wird dieses Datenpaket in einen Ausgangsspeicher übertragen und von dort auf die Übertragungsleitung. Bei diesem Verfahren wird die Empfangsdatenrate der Empfänger nicht berücksichtigt.

Das der Erfindung zugrundeliegende Problem besteht darin, ein Verfahren anzugeben, das die oben angegebenen Anforderungen erfüllt. Das Problem wird gemäß den Merkmalen des Patentanspruches 1 gelöst.

Die im folgenden verwendeten Begriffe sollen folgende Bedeutung haben:
- Zelle:: Informationseinheit fester Länge, die aus einer Headerinformation, z.B. Routing-Adresse und einem Nutzlastanteil besteht. Zur besseren Abgrenzung gegenüber den Leerzellen werden diese Zellen auch als Nutzzellen bezeichnet.
- Leerzelle:: In paketvermittelnden Systemen beinhalten nicht alle Zellen auch tatsächlich für einen Empfänger bestimmte Informationen. Der Zustand, daß keine Informationen zu übertragen sind, wird durch Leerzellen repräsentiert.
- Zellstrom:: Ein Zellstrom ist eine kontinuierliche Abfolge von Nutz- und Leerzellen.
- Paket:: Hierunter wird eine Informationseinheit in einem LAN (Local Area Network) verstanden. Pakete können auf LANs eine variable Länge besitzen.
- Paket-Übertragung:: Um variabel große Pakete in paketvermittelnden Systemen mit Zellen fester Länge übertragen zu können, werden sie beim Sender-LAN in eine entsprechende Anzahl von Zellen aufgeteilt, jeweils mit der Adresse des Empfängers versehen und ausgesandt.
- Datenrate:: Jedes LAN kann Daten mit einer bestimmten Datenrate empfangen und aussenden. In ATM-Netzen, auf denen Daten in Form eines Zellstroms übertragen werden, ist jedoch die Ubertragungsrate konstant. Die Empfangsoder Senderate eines LANs bezeichnet nicht die Ubertragungsrate des ATM-Netzes, sondern die zeitlich gemittelte Rate, die sich aus den Eintreffzeitpunkten von Zellen für das gleiche LAN ergeben. Um eine niedrigere Datenrate als die ATM-Netz-Übertragungsrate zu erhalten, müssen somit zwischen zwei Nutzzellen für das gleiche LAN eine entsprechende Anzahl von Leerzellen eingefügt werden.
- Überreservierungen:: Unter dem Begriff "Überreservierung" wird verstanden, daß die Summe der Datenraten aller Sender oder aller Empfänger die maximale Übertragungsrate des ATM-Netzes überschreiten kann. Hierbei liegt die Idee zugrunde, daß nur relativ selten alle angemeldeten Sender auch tatsächlich etwas senden werden. Durch Uberreservierung kann somit die Kapazität der Ubertragungsleitung besser genutzt werden.

Durch das erfindungsgemäße Verfahren werden also mehrere nebenläufig eintreffende Zellströme unter Echtzeitbedingungen derart auf eine einzige Übertragungsleitung verschränkt oder multiplext, daß unter Wahrung von festgelegten zeitlichen Mindestabständen der für den gleichen Empfänger bestimmten Zellen eine möglichst günstige Auslastung der Ubertragungsleitung wie auch ein möglichst geringer Speicherbedarf zur Pufferung der einzelnen Zellströme erzielt wird.

Die eingesetzte zyklische Zeittafel hat dabei einen Grundzyklus, der durch den Empfänger mit der niedrigsten Datenrate festgelegt wird. Alle anderen Empfänger mit einer höheren Datenrate werden dann in diese Zeittafel entsprechend ihrer Datenrate den Ausgabezeitpunkten zugeordnet. Dabei kann der Fall auftreten, daß für einen bestimmten Ausgabezeitpunkt Zellen für mehrere Empfänger übertragen werden sollen, also ein Konfliktfall besteht. Mit Hilfe der Stackspeicher wird dieser Konfliktfall gelöst, da jedem Ausgabezeitpunkt ein Stackspeicher zugeordnet wird, der die Zellen der konkurrierenden Empfänger puffern kann. Wird festgestellt, daß zu einem bestimmten Ausgabezeitpunkt in dem zugeordneten Stackspeicher mehrere Zellen enthalten sind, dann werden diese nacheinander ausgesandt, bis der Stackspeicher leer ist.

Es ist zweckmäßig, daß den einzelnen an der Übertragungsleitung angeschlossenen Empfängern im Senderschaltkreis Pufferspeicher zugeordnet sind, in denen die den Empfängern zu übertragenden Zellen zwischengespeichert werden. Wenn dies der Fall ist, dann ist es vorteilhaft, wenn die Stackspeicher nicht die Zellen selbst enthalten, sondern einen Zeiger auf die Pufferspeicher, in denen die Zellen gespeichert sind.

Andere Weiterbildungen der Erfindung ergeben sich aus den Unteransprüchen.

Anhand von Ausführungsbeispielen, die in den Figuren dargestellt sind, wird die Erfindung weiter erläutert. Es zeigen
- Figur 1: eine schematische Darstellung des Multiplexverfahrens,
- Figur 2: eine schematische Darstellung der im Multiplexverfahren verwendeten Zeittafel,
- Figur 3: die Art und Weise, wie Kollisionen behandelt werden,
- Figur 4: die Datenstruktur bei der Unterstützung der Gruppenadressierung.

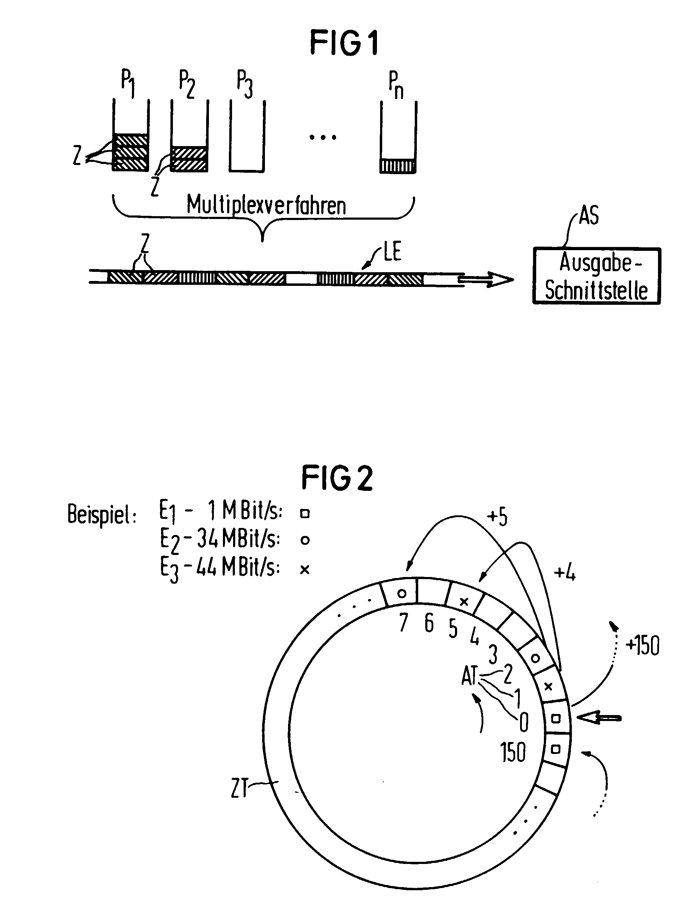

Nach Figur 1 ist im Sendebereich jedem Empfänger E jeweils ein Pufferspeicher P zugeordnet. Unter der Annahme, daß n Empfänger bei einer Übertragungsleitung mit Zellen besorgt werden, sind n Pufferspeicher Pn notwendig. In diesen Pufferspeichern Pl bis Pn werden die den zugeordneten Empfängern zu übertragenden Zellen zwischengespeichert, wie es in Figur 1 beispielhaft gezeigt ist. Die in den Pufferspeichern P1 bis Pn enthaltenen Zellen müssen nun über die Übertragungsleitung LE übertragen werden. Dazu werden sie auf die Übertragungsleitung LE zeitlich verschränkt oder gemultiplext, wie es in Figur 1 schematisch gezeigt ist. Auf der Übertragungsleitung LE laufen dann Zellströme zu einer Ausgabe-Schnittstelle AS, die die Zellen wieder auf die zugeordneten Empfänger verteilt.

Um nicht unnötig Speicherplatz bei den Pufferspeichern zu vergeuden, ist es zweckmäßig, wenn bei den einlaufenden Datenströmen, die von Kanälen geliefert werden, die Leerzellen bereits entfernt sind und in den Pufferspeichern nur noch Nutzzellen zwischengespeichert werden.

Das Multiplexverfahren beruht nun auf einer zyklischen Zeittafel ZT, die in Figur 2 dargestellt ist, in der Ausgabezeitpunkte AT von Zellen an ihre Empfänger geeignet verwaltet werden. Dabei möglicherweise auftretende Kollisionen, d.h. zu einem Zeitpunkt sind Zellen an mehr als einen Empfänger zu senden, werden durch eine Zwischenspeicherung in einem Stackspeicher behandelt.

Bei der Schilderung der Multiplexverfahrens wird von einem Vermittlungssystem ausgegangen, bei dem jedem Empfänger eine Datenrate zugeordnet ist. Dabei können z.B. sechs unterschiedliche Datenraten existieren, wie dies in Tabelle 1 gezeigt ist. Die in Tabelle 1 angegebenen Datenraten haben jedoch keinen Einfluß auf den prinzipiellen Ablauf des Verfahrens, sondern dienen nur der Erläuterung.

**Tabelle 1**

| F1 | F2 | F3 | F4 |
|---|---|---|---|
| Datenrate (MBit/s) | zeitl. Abstand (Inf.Einh) | gerundeter zeitl. Abstand | erreichb Datenr. (MBit/s) |
| 1 | 150 | 150 | 1 |
| 2 | 75 | 75 | 2 |
| 4 | 37.5 | 38 | 3.95 |
| 10 | 15 | 15 | 10 |
| 34 | 4.4 | 5 | 30 |
| 44 | 3.4 | 4 | 37.5 |
| Tabelle 1: Exemplarische Datenraten und zeitliche Abstände | | | |

Im ersten Feld der Tabelle 1 ist die Datenrate in Megabit pro Sekunde angegeben, im zweiten Feld F2 der zeitliche Abstand oder die Sprungdistanz in Informationseinheiten oder Zellen im Feld F3 der gerundete zeitliche Abstand in Informationseinheiten oder Zellen und in Feld F4 die erreichbare Datenrate bei gerundetem zeitlichen Abstand nach Feld F3.

Die Datenraten aus der Tabelle 1 müssen bei der Sequentialisierung auf der Übertragungsleitung durch das Multiplexverfahren so erzeugt werden, daß nach dem Aussenden einer Informationseinheit oder Zelle an einen Empfänger eine dessen Datenrate entsprechenden Zeit keine Informationseinheit oder Zelle mehr an diesen Empfänger gesendet wird. Diese Zeit, auch Sprungdistanz genannt, ist der Quotient aus der angenommenen Basissystemdatenrate von 150 Megabit pro Sekunde und der Datenrate des Empfängers. Aus der Tabelle 1 ist auch ersichtlich, daß nicht in jedem Fall die Datenraten gut durch die festen zeitlichen Abstände der Zeittafel realisiert werden können. Wenn keine kurzfristigen Überschreitungen der Datenraten (sog. Bursts) zulässig sind, müssen die erforderlichen zeitlichen Abstände zunächst zum höheren ganzzahligen Wert gerundet werden. Dies ist in Feld F4 im Vergleich zu Feld F2 ersichtlich.

Aus der Tabelle 1 können die benötigten zeitlichen Abstände (Sprungdistanz), d.h. die Zeit, die nach Ausgabe einer Zelle für einen bestimmten Empfänger vergehen muß, bis wieder eine Zelle an diesem Empfänger ausgesendet werden darf, entnommen werden. Daraus ist auch ersichtlich, wann für einen bestimmten Empfäng-er die nächste Zelle ausgesendet werden darf. Dieser Zeitpunkt wird im folgenden Übertragungszeitpunkt der Zelle genannt.

Mit Hilfe der Zeittafel nach Figur 2 können nun die Übertragungszeitpunkte für die einzelnen Empfänger festgelegt werden.

Die zyklische Zeittafel ist in Ausgabezeitpunke eingeteilt, das sind die Zeitpunkte, an denen eine Zelle auf die Übertragungsleitung gemultiplext werden kann. Die maximale Anzahl der Ausgabezeitpunkte wird durch den Grundzyklus der Zeittafel festgelegt, der von der niedrigsten Datenrate der Empfänger abhängt. Es ist in unserem Beispiel der Empfänger E1, der eine Übertragungsrate von 1 MBit/s aufweist. Unter der Annahme, daß die Basissystemübertragungsrate 150 MBit/s ist, können bei einem Grundzyklus 150 Zellen übertragen werden. Der Empfänger E1 mit der niedrigsten Datenrate muß also nach der Aussendung einer Zelle mindestens 149 andere Zellen abwarten, bis er wieder eine Zelle empfangen kann. Da dies die langsamste Klasse ist, muß die Zeittafel einen Warteschlangenaufbau von mindestens 150 Einträgen aufweisen.

In Figur 2 ist eine zyklische Zeittafel schematisch dargestellt, die in 150 Ausgabezeitpunkte AT (1 bis 150) unterteilt ist. Es werden Zellen an drei Empfänger E1 bis E3 ausgegeben, wobei der Empfänger E1 eine Datenrate von 1 MBit/s, der Empfänger E2 eine Datenrate von 34 MBit/s und der Empfänger E3 eine Datenrate von 44 MBit/s hat. Diese Zuordnung der Ausgabezeitpunkte der Zeittafel zu den Übertragungszeitpunkten für die Empfänger E1 bis E3 ist gekennzeichnet. Gemäß Tabelle 1 hat der Empfänger E1 eine Sprungdistanz von 150, der Empfänger E2 eine Sprungdistanz von 5 und der Empfänger E3 eine Sprungdistanz von 4. Die Übermittlungszeitpunkte sind jeweils für zwei Übertragungszeitpunkte gezeigt. Der Empfänger E2 erhält zum Ausgabezeitpunkt zwei und zum Ausgabezeitpunkt sieben jeweils eine Zelle, der Empfänger E3 zum Ausgabezeitpunkt eine und zum Ausgabezeitpunkt fünf jeweils eine Zelle.

An Figur 2 ist auch erkennbar, daß dann Schwierigkeiten auftreten, wenn z.B. die Startplätze für den Empfänger zwei und den Empfänger drei vertauscht werden. Dann nämlich fallen zum Ausgabezeitpunkt sechs jeweils eine Zelle für den Empfänger E2 und für den Empfänger E3 zusammen. Somit liegt eine Kollision vor, da zum Ausgabezeitpunkt 6 Zellen für beide Empfänger E2 und E3 ausgegeben werden müßten.

Zur Behandlung der Kollisionen wird das Prinzip so erweitert, daß nun nicht mehr nur der Eintrag einer Zelle für einen Ausgabezeitpunkt möglich ist. Stattdessen ist jedem Ausgabezeitpunkt ein Stackspeicher zugeordnet, der die kolligierenden Zellen aufnehmen kann. Die Struktur ergibt sich somit als eine Warteschlange von Stackspeichern, deren Einträge Zeiger auf die Pufferspeicher P1 bis Pn nach Figur 1 darstellen. Beim Ablauf des Verfahrens wird bei Kollisionen das oberste Speicherwort des Stackspeichers ausgegeben und anschließend zu nachfolgenden Ausgabezeitpunkten die weiteren Einträge im Stackspeicher. Die Größe der einzelnen Stackspeicher ist abhängig von der Zahl der angebotenen Datenraten des Systems. Die unterschiedlichen Datenraten bewirken, daß in einem ungünstigsten Fall von n verschiedenen Zeitpunkten (n = unterschiedliche Datenraten; im Beispiel n = 6) aus Empfängernummern mit unterschiedlichen Sprungdistanzen für den gleichen Ausgabezeitpunkt eingetragen werden.

Somit ist im Ausführungsbeispiel pro Ausgabezeitpunkt eine Stackspeichergröße mit einer Anzahl von Speicherplätzen für sechs Einträge plus einem Eintrag für Neueintragungen für die Stackspeicher vorzusehen. Simulationen haben allerdings gezeigt, daß an einer Kollision typischer Weise nur zwei bis drei Empfänger beteiligt sind. Der größte Teil des Stackspeichers dient somit als Sicherheitsreserve.

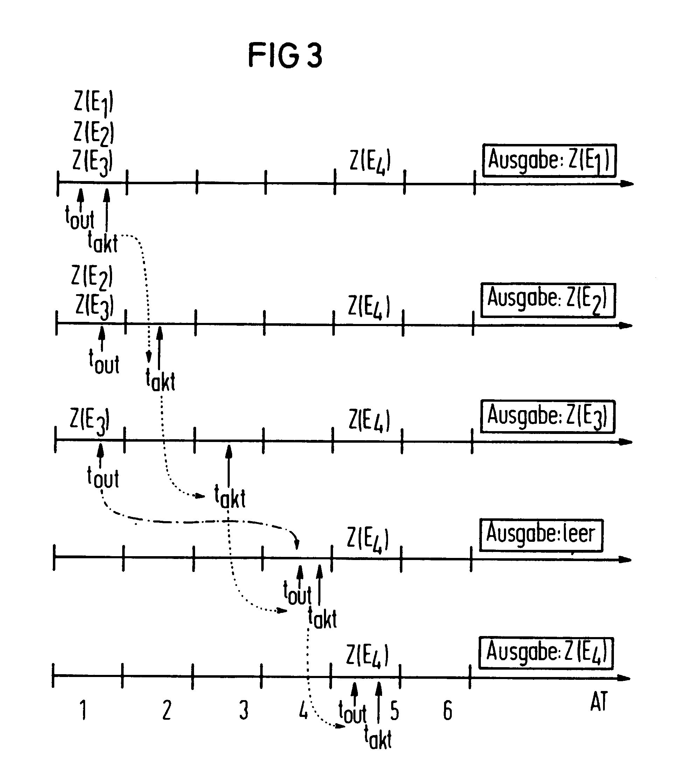

Die Art und Weise wie Konfliktfälle behandelt werden, wird in Verbindung mit Figur 3 besprochen. Figur 3 zeigt sechs Ausgabezeitpunkte. Es sei angenommen, daß zum Ausgabezeitpunkt 1 Zellen Z für drei Empfänger E1, E2, E3 im zugeordneten Stackspeicher stehen, während zu den Ausgabezeitpunkten 2, 3, 4 keine Zellen übertragen werden müssen, zum Ausgabezeitpunkt 5 dagegen wieder eine Zelle Z für den Empfänger E4 auszugeben ist. Zum Ausgabezeitpunkt E1 liegt somit ein Konfliktfall vor, da drei Empfänger E1 bis E3 mit Zellen bedient werden könnten. Diese Zellen werden nun gemäß folgendem Verfahren auf die Überleitung gemultiplext, wobei zur Erklärung zwei Zeiger tₐₖₜ und tₒᵤₜ verwendet werden. Der Zeiger tₐₖₜ gibt an, welcher Ausgabezeitpunkt AT vorliegt, der Zeiger tₒᵤₜ zeigt auf den Stackspeicher, aus dem die Zellen entnommen werden. Im Verlauf des Verfahrens kann der Betrag der beiden Zeigerwerte maximal um den Wert der Konstante Stackspeichergröße variieren. Das heißt, das Beispiel nach Figur 2 wird so variiert, daß der Grundzyklus nun nicht mehr der Sprungdistanz des Empfängers mit niedrigster Datenrate entspricht, sondern der Grundzyklus ist definiert als Sprungdistanz des Empfängers mit niedrigster Datenrate plus Stackspeichergröße plus 1. Wenn die Stackspeichergröße fehlen würde, so könnten sich später beim Weiterschalten von Zellen für Empfänger mit der niedrigsten Datenrate Fehler ergeben, die in einem verfrühten erneuten Aussenden von Zellen an diesem Empfänger resultieren würden.

Zur Behandlung von Kollisionen können Stackspeicher verwendet werden. Selbstverständlich ist es auch möglich, die Speicher als FiFo Speicher zu realisieren. Jedoch sind Stackspeicher vorteilhafter. Eine Kollision bedeutet, daß eine Menge von Zellen an Empfänger mit gleichen oder unterschiedlichen Datenraten zum selben Zeitpunkt ausgegeben werden könnten. Im Prinzip ist es gleichgültig, welcher dieser Empfänger gewählt wird. Die Empfänger mit einer hohen Datenrate erwarten jedoch im allgemeinen eine große Datenmenge, sodaß es sinnvoll ist, diese Empfänger zu bevorzugen. Ein FiFo leistet jedoch genau das Gegenteil. Hier werden die Zellen derjenigen Empfänger zuerst ausgegeben, die auch zuerst eingetragen wurden. Dies sind die Empfänger mit der größten Sprungdistanz, also diejenigen mit der niedrigsten Datenrate. Ein Stackspeicher, der nach dem LiFo Prinzip arbeitet, gewährleistet dagegen, daß Zellen für Empfänger mit einer kurzen Sprungdistanz, also hoher Datenrate, die zuletzt eingefügt werden, als erste wieder ausgegeben werden.

Die Verwendung eines Stackspeichers bringt eine Durchsatzsteigerung von ca. 3% mit sich.

Unter Verwendung der beiden Zeiger tₒᵤₜ und tₐₖₜ kann die Kollisionsbehandlung erläutert werden. Wenn keine Kollision besteht, zeigen die Zeiger tₒᵤₜ und tₐₖₜ immer auf den gleichen Stackspeicher in der Warteschlange gemäß der Zeittafel. Beim Auftreten einer Kollision wartet der Zeiger tₒᵤₜ solange, bis der Stackspeicher vollständig abgearbeitet ist und versucht dann, den Zeiger tₐₖₜ wieder einzuholen. Zum Ausgabezeitpunkt 1 nach Figur 3 liegt eine Kollision vor. Im Stackspeicher, der dem Ausgabezeitpunkt 1 zugeordnet ist, stehen drei Zellen für drei unterschiedliche Empfänger E1 bis E3. Zunächst zeigen die Zeiger tₒᵤₜ und tₐₖₜ auf denselben Stackspeicher, d.h. daß der Übertragungszeitpunkt der Zelle Z(E1) mit dem Ausgabezeitpunkt 1 zusammenfällt. Demgemäß wird die Zelle Z(E1) auf die Übertragungsleitung ausgegeben. Anschließend wandert der Zeiger tₐₖₜ weiter zum nächsten Ausgabezeitpunkt 2, während der Zeiger tₒᵤₜ auf den Stackspeicher für den Ausgabezeitpunkt 1 zeigt. Jetzt wird zum Ausgabezeitpunkt 2 die Zelle Z(E2) für den Empfänger auf die Übertragungsleitung ausgegeben. Entsprechend wird zum Ausgabezeitpunkt 3 die Zelle Z (E3) für den Empfänger E3 übermittelt. Damit ist der Stackspeicher für den Ausgabezeitpunkt leer und der Zeiger tₒᵤₜ springt nun ebenso wie der Zeiger tₐₖₜ zum Ausgabezeitpunkt 4. Im Stackspeicher für den Ausgabezeitpunkt 4 ist jedoch keine Zelle enthalten, somit wird eine Leerzelle ausgegeben. Erst zum Ausgabezeitpunkt 5 enthält der zugeordnete Stackspeicher eine Zelle für den Empfänger E4, demgemäß der diese Zelle für den Empfänger E4 auf die Übertragungsleitung gegeben.

Bei diesem Verfahren tritt nur noch dann eine Lücke im Zellstrom auf, wenn beide Zeiger den gleichen Wert haben und der zugeordnete Stackspeicher leer ist. Wenn die Summe der einzelnen Empfängerdatenraten die Übertragungskapazität des ATM-Netzes nicht überschreiten kann, ist gewährleistet, daß der Zeiger tₒᵤₜ den Zeiger tₐₖₜ bald einholt, denn eine Kollision kann als erhöhte Datenausgaberate zu einem Zeitpunkt interpretiert werden, die dann durch eine entsprechende niedrige Datenrate zu einem anderen, späteren Zeitpunkt zwangsläufig kompensiert werden muß.

Durch das Einführen des Zeigers tₒᵤₜ wird zudem eine Verbesserung des Ausgabeverhaltens erreicht. Während in der Ubersichtsanordnung der Figur 2 zu den Zeitpunkten 3 und 4, wo keine Zellen für einen empfangsbereiten Empfänger vorlagen, keine andere Möglichkeit bestand, eine Leerzelle auszugeben, haben wir in der durch die Stackspeicher erweiterten Lösung die Möglichkeit, solche Lücken ggf. durch Einträge aus den Stackspeichern zu füllen.

Wenn für einen Empfänger Zellen zur Verfügung gestellt werden, der bisher noch nicht am Verfahren beteiligt war, ist es erforderlich, den neuen Empfänger in die Zeittafel einzuordnen. Die Einordnung erfolgt mit Hilfe der Sprungdistanz des neuen Empfängers. Es ist dabei zweckmäßig, den ersten Abfragezeitpunkt in der Form tₐₖₜ plus Sprungdistanz des neuen Empfängers festzulegen, also nicht sofort zum aktuellen Zeitpunkt tₐₖₜ eine Zelle des neuen Empfängers auszusenden, sondern verzögert um die Sprungdistanz des neuen Empfängers.

Wenn die letzte Zelle eines aus mehreren Zellen bestehenden Pakets ausgegeben wurde, besteht immer die Möglichkeit, daß hiermit der Empfängerpuffer P vollständig geleert wurde. Es ist also zu prüfen, ob sich noch weitere Einträge in dem zum jeweiligen Empfänger gehörigen Pufferspeicher befinden. Ist dies der Fall, so kann in üblicher Weise die Zelle übertragen werden. Ist dagegen der Pufferspeicher leer, dann wird dieser nicht mehr abgefragt, da in den Stackspeichern kein Verweis mehr auf den Pufferspeicher stehen kann. Erst dann, wenn Zellen zu diesem Empfänger gesendet werden sollen, muß durch Neueintrag in der oben angegebenen Weise dafür gesorgt werden, daß in dem um die Sprungdistanz des Empfängers plus tₐₖₜ festgelegten Ausgabezeitpunkt zugeordneten Stackspeicher ein Verweis auf den Pufferspeicher eingetragen wird. Diese Art 5 der Behandlung von leeren Pufferspeichern und die Aktivierung eines bislang nicht verwendeten Empfängers ermöglicht eine automatische Anpassung des Verfahrens auf die bei einer Unterstützung von Uberreservierung veränderlichen aktiven Sender-/Konfigurationen.

Aus Tabelle 1 ist erkennbar, daß sich nicht alle gewünschten Datenraten mit festen ganzzahligen zeitlichen Abständen zufriedenstellend realisieren lassen. Bei den Datenraten 34 und 44 MBit/s sind Verluste zu verzeichnen.

Eine Abhilfe können hier sog. Bursts schaffen, also kurzzeitige Überschreitungen der Datenraten. Bei den bisherigen Verfahren mit permanent gleichen zeitlichen Abständen der Zeittafel wird garantiert, daß die Datenrate, die sich aus dem zeitlichen Abstandszweier Zellen ergibt, die gewünschte Datenrate -auch nicht kurzzeitig- überschreitet. Wenn der zeitliche Abstand von mehreren aufeinander folgenden Zellen jedoch variieren kann, was kurzzeitigen Überschreitungen der Datenrate entspricht, so lassen sich auch ungünstigere Datenraten gut annähern.

Zu diesem Zwecke muß lediglich die Sprungdistanz des entsprechenden Empfängers modifiziert werden. Diese Funktion darf nun nicht mehr lediglich für die jeweilige Datenrate einen festen Wert liefern, sondern dieser Wert wird zyklisch verändert. In Tabelle 2 werden für die kritischen Klassen von Datenraten nach Tabelle 1 Sequenzen von zeitlichen Aständen angegeben, die eine bessere Annäherung der gewünschten Datenrate ergeben.

**Tabelle 2**

| Datenrate (MBit/s) | zeitl. Abstand (Inf.Einh) | gerundeter zeitl. Abstand | erreichb Datenr. (MBit/s) | Sequenz zeitl Abstände (Inf.Einh) | Datenr. bei Bursts (MBit/s) |
|---|---|---|---|---|---|
| 1 | 150 | 150 | 1 | 150 | 1 |
| 2 | 75 | 75 | 2 | 75 | 2 |
| 4 | 37.5 | 38 | 3.95 | 38/37 | 4 |
| 10 | 15 | 15 | 10 | 15 | 10 |
| 34 | 4.4 | 5 | 30 | 5/4 | 33.75 |
| 44 | 3.4 | 4 | 37.5 | 4/3 | 43.75 |

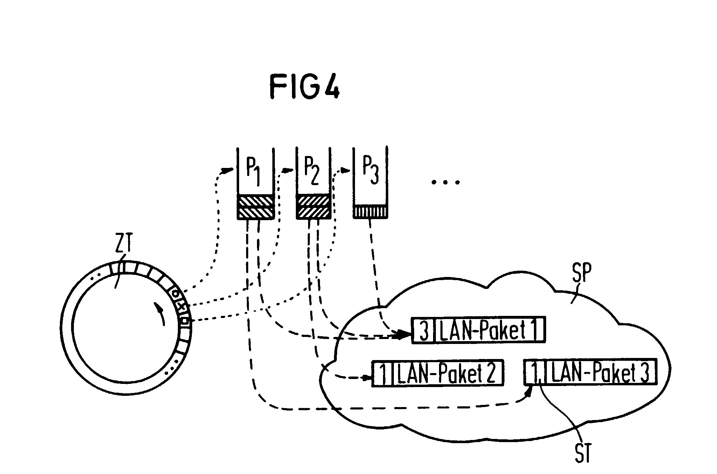

In paketvermittelnden Systemen wird häufig eine Gruppenadressierung als weitergehender Dienst angeboten. Bei der Gruppenadressierung werden die Informationseinheiten oder Zellen eines Senders mehreren Empfängern zugestellt. Bei der Unterstützung einer Gruppenadressierung müssen die Stackspeicherdimensionierung und der Eintrag einer Zelle in die Stackspeicher modifiziert werden. Für die Realisierung der Gruppenadressierung wird die Gruppe in die einzelnen Empfänger aufgelöst und die Nachricht wird in mehrere Empfängerpufferspeicher eingetragen. Um Speicherplatz zu sparen, wird in der für die Gruppenadressierung erweiterten Version des Multiplexverfahrens nicht für jede Kopie einer Zelle an einen Empfänger jeweils ein neuer Speicherplatz angefordert, sondern das vollständige Paket wird in einem Speicher gesammelt und mit einem Zähler versehen, der angibt, an wie viele Empfänger das Paket zu versenden ist. In die jeweiligen Empfängerpufferspeicher wird nur ein Zeiger auf den gemeinsam zu nutzenden Speicher eingetragen. Figur 4 zeigt diese Lösung. Es sind drei LAN-Pakete PK1, PK2, PK3 gezeigt, die in einem gemeinsamen Speicher SP abgespeichert sind. Bei jedem LAN-Paket ist in der Speicherstelle ST angegeben, ob das Paket für einen oder mehrere Empfänger bestimmt ist.

Das Verfahren zum Eintragen der Zellen in die Empfängerpufferspeicher muß somit bei einer Gruppenadressierung nicht nur den Zeiger auf das Paket vervielfältigen, sondern es muß auch das Verfahren zum Eintragen eines bislang noch nicht benutzten Pufferspeichers in die Zeittafel mehrfach aufgerufen werden. Hieraus ergibt sich eine zweite Modifikation für die Unterstützung der Gruppenadressierung. Da alle bei einer Gruppenadressierung adressierten Empfänger in der gleichen Datenratenklasse liegen, müssen zu einem Zeitpunkt auch die Stackspeicher der Zeittafel eine der maximalen Gruppengröße entsprechende Anzahl von Einträgen aufnehmen können. Die Stackspeichergröße ist also von (6 + 1) im Ausführungsbeispiel der Tabelle 1 auf 6 + maximale Gruppengröße zu verändern. Bei einer typischen maximalen Gruppengröße von 16 Empfängern ergibt sich somit eine Stackgröße von 22 Speicherworten für 22 Einträge.

Aus Figur 4 können die Verhältnisse bei der Gruppenadressierung entnommen werden. Die Zuordnung der Zeittafel ZT mit den Ausgabezeitpunkten zu den Pufferspeichern P1 bis P3 erfolgt auf die bisher geschilderte Weise. In den Pufferspeichern P1 bis P3 stehen dagegen Verweise auf in den Speicher SP enthaltene LAN-Pakete. Es ist erkennbar, daß z.B. das Paket PK1 für drei Empfänger bestimmt ist, nämlich die Empfänger E1 bis E3. Dementsprechend gibt es in den Pufferspeichern P1 bis P3 Zeiger, die auf das LAN-Paket PK1 zeigen. Zum Auftrittszeitpunkt, z.B. für den Pufferspeicher P1 wird dann die erste Zelle des Pakets PK1 auf die Ubertragungsleitung übertragen.

## Patentansprüche

1. Verfahren zum Multiplexen von für mehrere Empfänger bestimmte Zellen auf eine mit den Empfängern verbundene Übertragungsleitung,
bei dem eine zyklische Zeittafel (ZT) erzeugt wird, die in Ausgabezeitpunkte (AT) unterteilt ist, zu denen Zellen (Z) übertragbar sind, und
bei dem die Übertragungszeitpunkte für Zellen der Empfänger entsprechend deren Datenrate auf die Ausgabezeitpunkte der Zeittafel verteilt werden.

2. Verfahren nach Anspruch 1, bei dem die Zeittafel (ZT) einen Grundzyklus hat, der durch den Empfänger mit der niedrigsten Datenrate festgelegt wird.

3. Verfahren nach Anspruch 2, bei dem den Ausgabezeitpunkten Stackspeicher zugeordnet werden, in die die zu übertragenden Zellen eingespeichert werden, wenn zum Ausgabezeitpunkt Zellen für mehrere Empfänger ausgesendet werden sollen (Konfliktfall), und bei dem in einem Stackspeicher enthaltene Zellen nacheinander ausgesendet werden.

4. Verfahren nach Anspruch 3, bei dem im Konfliktfall nacheinander zu aufeinanderfolgenden Ausgabezeitpunkten die Zellen eines Stackspeichers übertragen werden, bis der Stackspeicher leer ist.

5. Verfahren nach einem der Ansprüche 3 oder 4, bei dem die Stackspeicher bei Kollisionen Adressen enthalten, die auf den Empfängern zugeordnete Pufferspeicher zeigen.

6. Verfahren nach einem der Ansprüche 3 - 5, bei dem die Stackspeicher nach dem LiFo-Prinzip arbeiten.

7. Verfahren nach Anspruch 6, bei dem die Anzahl der Speicherworte pro Stackspeicher von der Zahl der unterschiedlichen Datenraten der an eine Ubertragungsleitung angeschlossenen Empfänger plus einem Speicherwort für einen Neueintrag beträgt.

8. Verfahren nach Anspruch 7, bei dem der Grundzyklus gebildet wird aus dem zeitlichen Abstand der Zellen für den Empfänger niedrigster Datenrate plus der Anzahl der Speicherworte pro Stack plus 1.

9. Verfahren nach Anspruch 8, bei dem ein Ausgabezeiger (tₒᵤₜ), der auf den ausgebenden Stackspeicher zeigt, und ein aktiver Zeiger (tₐₖₜ), der auf den Ausgabezeitpunkt der Zeittafel zeigt, vorgesehen werden,
bei dem der Ausgabezeiger solange auf einen Stackspeicher zeigt, solange dort Einträge für Zellen enthalten sind, während der Ausgabezeiger in der Zeittafel weiter wandert und bei dem bei leerem Stackspeicher der Ausgabezeiger und aktive Zeiger auf denselben Ausgabezeitpunkt der Zeittafel zeigen.

10. Verfahren nach Anspruch 9, bei dem bei Einfügen eines neuen Empfängers in die Zeittafel (ZT) die Sprungdistanz aus der Datenrate dieses Empfängers bestimmt wird und der erste Ausgabezeitpunkt einer Zelle für diesen Empfänger aus der Stellung des aktiven Zeigers (tₐₖₜ) plus der Sprungdistanz errechnet wird.

11. Verfahren nach Anspruch 10, bei dem ein Empfänger aus der Zeittafel entfernt wird, wenn der zugeordnete Empfängerpufferspeicher leer ist.

12. Verfahren nach einem der Ansprüche 1 bis 11, bei dem die Übertragungszeitpunkte für Zellen eines Empfängers in fester Sprungdistanz erfolgen, wobei die Sprungdistanz die Zeit ist, die nach der Ausgabe einer Zelle für einen bestimmten Empfänger vergehen muß, bis wieder eine Zelle an diesen Empfänger ausgesendet werden darf.

13. Verfahren nach einem der Ansprüche 1 bis 11, bei dem die Sprungdistanz für einen Empfänger variabel ist.

14. Verfahren nach einem der Ansprüche 3 bis 13, bei dem bei Vorliegen von Empfängern mit gleicher Datenrate die den Ausgabezeitpunkten der Zeittafel zugeordneten Stackspeicher um eine der Anzahl der Empfänger gleicher Datenrate entsprechende Anzahl von Speicherworten vergrößert wird.

15. Verfahren nach Anspruch 1,
dadurch **gekennzeichnet,**
daß zur Unterstützung einer Gruppenadressierung die LAN-Pakete in einem gemeinsamen Speicher (SP) gespeichert sind, daß in den Empfängern zugeordneten Pufferspeicher (P) Zeiger auf die LAN-Pakete eingespeichert werden, wenn das entsprechende LAN-Paket dem zugeordneten Empfängern zugeleitet werden soll.

## Claims

1. Method for multiplexing cells intended for a plurality of receivers onto a transmission line connected to the receivers, wherein a cyclical time table (ZT) is generated which is divided into output times (AT) at which cells (Z) can be transmitted, and wherein the transmission times for cells of the receivers are distributed to the output times of the time table in accordance with their data rate.

2. Method according to Claim 1, wherein the time table (ZT) has a basic cycle defined by the receiver having the lowest data rate.

3. Method according to Claim 2, wherein stack stores are allocated to the output times, in which stack stores the cells to be transmitted are stored if cells for a plurality of receivers are to be transmitted at the output time (case of conflict), and wherein cells contained in a stack store are transmitted one after the other.

4. Method according to Claim 3, wherein in the case of conflict the cells of a stack store are transmitted one after the other at successive output times until the stack store is empty.

5. Method according to one of Claims 3 or 4, wherein in the event of collisions the stack stores contain addresses pointing to the buffer memories allocated to the receivers.

6. Method according to one of Claims 3 - 5, wherein the stack stores operate according to the LiFo principle.

7. Method according to Claim 6, wherein the number of memory words per stack store is the number of different data rates of receivers connected to a transmission line plus one memory word for a new entry.

8. Method according to Claim 7, wherein the basic cycle is formed from the time interval of the cells for the receiver having the lowest data rate plus the number of memory words per stack plus 1.

9. Method according to Claim 8, wherein an output pointer (tₒᵤₜ), which points to the outputting stack store, and an active pointer (tₐₖₜ), which points to the output time of the time table, are provided, wherein the output pointer points to a stack store as long as the latter contains entries for cells, while the output pointer moves on in the time table, and wherein the output pointer and active pointers point to the same output time of the time table when the stack store is empty.

10. Method according to Claim 9, wherein when a new receiver is inserted into the time table (ZT), the step distance is determined from the data rate of said receiver, and the first output time of a cell for said receiver is calculated from the position of the active pointer (tₐₖₜ) plus the step distance.

11. Method according to Claim 10, wherein a receiver is removed from the time table when the allocated receiver buffer memory is empty.

12. Method according to one of Claims 1 to 11, wherein the transmission times for cells of a receiver follow at a fixed step distance, the step distance being the time which must elapse for a particular receiver after the output of a cell until a cell may be transmitted to said receiver again.

13. Method according to one of Claims 1 to 11, wherein the step distance for a receiver is variable.

14. Method according to one of Claims 3 to 13, wherein, given the presence of receivers having the same data rate, the stack stores allocated to the output times of the time table are enlarged by a number of memory words corresponding to the number of receivers having the same data rate.

15. Method according to Claim 1, characterized in that, for supporting group addressing, the LAN packets are stored in a common store (SP), and in that pointers to the LAN packets are stored in buffer memories (P) allocated to the receivers if the corresponding LAN packet is to be forwarded to the allocated receiver.

## Revendications

1. Procédé pour multiplexer des cellules destinées à plusieurs récepteurs sur une ligne de transmission connectée aux récepteurs,
dans lequel on produit un tableau de temps cyclique (ZT) qui est subdivisé en temps d'émission (AT) auxquels des cellules (Z) peuvent être transmises, et
dans lequel les temps de transmission pour les cellules des récepteurs sont distribués sur les temps d'émission du tableau de temps en fonction de leurs débits.

2. Procédé selon la revendication 1, dans lequel le tableau de temps (ZT) a un cycle de base qui est fixé par le récepteur possédant le débit le plus bas.

3. Procédé selon la revendication 2, dans lequel, au temps d'émission, sont associées des mémoires à piles dans lesquelles les cellules à transmettre sont stockées lorsque des cellules destinées à plusieurs récepteurs doivent être émises au temps d'émission (cas de conflit), et dans lequel les cellules contenues dans une mémoire à piles sont émises l'une après l'autre.

4. Procédé selon la revendication 3, dans lequel, dans le cas de conflit, les cellules d'une mémoire à piles sont transmises l'une après l'autre à des temps d'émission qui se suivent jusqu'à ce que la mémoire à piles soit vide.

5. Procédé selon l'une des revendications 3 ou 4, dans lequel les mémoires à piles contiennent, en présence de collisions, des adresses qui pointent sur les mémoires tampons attribuées aux récepteurs.

6. Procédé selon l'une des revendications 3 à 5, dans lequel les mémoires à piles travaillent selon le principe LiFo.

7. Procédé selon la revendication 6, dans lequel le nombre des mots de mémoire par mémoire à piles est égal au nombre des différents débits des récepteurs connectés à une ligne de transmission plus un mot de mémoire pour une nouvelle entrée.

8. Procédé selon la revendication 7, dans lequel le cycle de base est constitué à partir de l'intervalle de temps des cellules destinées au récepteur ayant le débit le plus bas plus le nombre des mots de mémoire par pile plus 1.

9. Procédé selon la revendication 8, dans lequel il est prévu un pointeur d'émission (tₒᵤₜ), qui pointe sur la mémoire à piles émettrice, et un pointeur à actif (tₐₖₜ), qui pointe sur le temps d'émission du tableau de temps,
dans lequel le pointeur d'émission pointe sur une mémoire à piles aussi longtemps que des entrées pour des cellules y sont contenues, tandis que le pointeur d'émission se déplace plus loin dans le tableau de temps, et dans lequel, si la mémoire à piles est vide, le pointeur d'émission et le pointeur actif pointent sur le même temps d'émission du tableau de temps.

10. Procédé selon la revendication 9, dans lequel, dans le cas d'incorporation d'un nouveau récepteur dans le tableau de temps (ZT), la distance de saut est déterminée à partir du débit de ce récepteur, et le premier temps d'émission d'une cellule destinée à ce récepteur est calculé à partir de la position du pointeur actif (tₐₖₜ) plus la distance de saut.

11. Procédé selon la revendication 10, dans lequel un récepteur est éliminé du tableau de temps lorsque la mémoire tampon de récepteur qui lui est attribuée est vide.

12. Procédé selon l'une des revendications 1 à 11, dans lequel les temps de transmission pour les cellules d'un récepteur se présentent à une distance de saut fixe, la distance de saut étant le temps qui doit s'écouler après l'émission d'une cellule vers un récepteur donné avant qu'une cellule puisse être émise vers ce récepteur.

13. Procédé selon l'une des revendications 1 à 11, dans lequel la distance de saut pour un récepteur est variable.

14. Procédé selon l'une des revendications 3 à 13, dans lequel, en présence de récepteurs de même débit, les mémoires à piles associées aux temps d'émission du tableau de temps sont augmentées d'un nombre de mots de mémoire qui correspond au nombre des récepteurs de même débit.

15. Procédé selon la revendication 1,
caractérisé
en ce que, pour l'assistance d'un adressage de groupes, les paquets LAN sont stockés dans une mémoire commune (SP), en ce que, dans des mémoires tampons (P) associées aux récepteurs, sont mémorisés des pointeurs pointés sur les paquets LAN lorsque le paquet LAN correspondant doit être acheminé aux récepteurs associés.
